# EUROPÄISCHE PATENTSCHRIFT

(11) **EP 2 403 991 B1**
(45) Veröffentlichungstag und Bekanntmachung des Hinweises auf die Patenterteilung: **28.11.2012**
(21) Anmeldenummer: 10700855.9
(22) Anmeldetag: 14.01.2010
(51) Int. Cl.: D21F 5/00, D21F 5/20, D21G 9/00

(54) **STEUERUNG DER ERWEITERTEN TROCKENPARTIE EINER PAPIERMASCHINE**
CONTROL OF AN EXPANDED DRYING SECTION OF A PAPER MACHINE
COMMANDE DE LA PARTIE SÈCHE ÉTENDUE D'UNE MACHINE A PAPIER

(30) Priorität: 04.03.2009 DE 102009011217
(43) Veröffentlichungstag der Anmeldung: 11.01.2012
(73) Patentinhaber: Siemens Aktiengesellschaft, 80333 München (DE)
(72) Erfinder: REINSCHKE, Johannes, 90425 Nürnberg (DE); FRIES, Edgar, 91077 Neunkirchen am Brand (DE); SIEBER, Albrecht, 91096 Möhrendorf (DE); SPETH, Friedrich, 91074 Herzogenaurach (DE)
(86) Internationale Anmeldenummer: PCT/EP2010/050394
(87) Internationale Veröffentlichungsnummer: WO 2010/099994

(56) Entgegenhaltungen:
- WO-A1-00/34572
- WO-A2-2006/051157
- DE-A1- 19 612 155

## Beschreibung

Die Erfindung betrifft ein Verfahren und eine modellgestützte Steuerung zur Steuerung zumindest eines Teils einer Papiermaschine, eine Papiermaschine mit einer derartigen Steuerung, ein Computerprogramm zur Durchführung des erfindungsgemäßen Verfahrens sowie ein Computerprogrammprodukt, auf dem das erfindungsgemäße Computerprogramm gespeichert ist.

Insbesondere in der Trockenpartie einer Papiermaschine wird viel Energie für die Trocknung der Papierbahn benötigt - eine Steigerung der Energieeffizienz der Trockenpartie kann sich signifikant auf die Gesamtproduktionskosten auswirken. Gelegentlich ist auch die Trockenpartie bezüglich des Anlagendurchsatzes der "Flaschenhals", d.h. durch eine verbesserte Trocknung kann der Durchsatz gesteigert werden.

Zur Energieeinsparung ist es bekannt, intelligente Steuerungen, wie z.B. das "Dryer Management System" von Kadant Johnson, zu verwenden, das die Trocknung in der eigentlichen Trockenpartie, im Wesentlichen bestehend aus Trockenzylindern und Trockenhaube, einer Papiermaschine modelliert.

Der Erfindung liegt die Aufgabe zugrunde, eine verbesserte beziehungsweise optimierte Fahrweise einer "erweiterten Trockenpartie" einer Papiermaschine zu ermöglichen.

Unter der "erweiterten Trockenpartie" wird dabei verstanden:
- die "eigentliche" Trockenpartie, im Wesentlichen bestehend aus Trockenzylindern und Trockenhaube und ggf. aufgeteilt in Vortrockenpartie und Nachtrockenpartie mit dazwischen befindlicher Leimpresse;
- ggf. die Leimpresse;
- das Dampf- und Kondensatsystem;
- das Abluft-Wärmerückgewinnungssystem;
- die Nasspresse;
- das Siebwasser, insbesondere die durch Frischdampfeinsatz geregelte Siebwassertemperatur.

Unter einer "verbesserten" oder "optimierten" Fahrweise wird eine Fahrweise verstanden, die den spezifischen Energieverbrauch (= Tonnen Dampf pro Tonne produzierten Papiers) verringert und/oder den Durchsatz (= Tonnen produzierten Papiers pro Stunde) erhöht und/oder die Produktionsmenge über einen längeren Zeitraum (= Tonnen produzierten Papiers pro Woche oder Monat) steigert. Letzteres Kriterium "Steigerung der Produktionsmenge" kann durch die Erhöhung des Durchsatzes und/oder die Erhöhung der Produktionszeit beziehungsweise der Anlagenverfügbarkeit, also durch die Verbesserung der sogenannten "Runnability", erreicht werden.

Diese Aufgabe wird gelöst durch ein Verfahren zur Steuerung zumindest eines Teils einer Papiermaschine, enthaltend ein Online-Modell der Anlagenaggregate
● Trockenpartie, ggf. unterteilt in Vortrockenpartie und Nachtrockenpartie mit dazwischen liegender Leimpresse,
● Wärmerückgewinnungssystem,
● Dampf- und Kondensatsystem,
   optional zusätzlich enthaltend ein Online-Modell des Anlagenaggregates
● Nasspresse und/oder
● Siebwassertemperaturregelung,
   wobei
   - im Online-Modell zwischen den vier Stoffströmen
● feuchtes Papier,
● feuchte Luft,
● Dampf- und Kondensatgemisch hochreinen Wassers,
● Prozesswässer mit unterschiedlichen Glykol-Gehalten unterschieden wird,
   - im Online-Modell eine Massen- und Energiebilanz für alle Stoffströme jeweils in
● der Trockenpartie,
● dem Wärmerückgewinnungssystem und
● dem Dampf- und Kondensatsystem berechnet wird,
   - aus den Massen- und Energiebilanzen der spezifische Energieverbrauch berechnet wird und
   - die Massen- und Energiebilanzen und/oder der spezifische Energieverbrauch - vorzugsweise grafisch und/oder tabellarisch - dargestellt und/oder zur Anzeige gebracht werden.

Die Aufgabe wird weiter gelöst durch eine Steuerung, eine Papiermaschine, ein Computerprogramm sowie ein Computerprogrammprodukt mit den in den Ansprüchen 12 - 15 angegebenen Merkmalen.

Das erfindungsgemäße Verfahren basiert auf einem Online-Modell der kompletten "erweiterten Trockenpartie" mit den bereits genannten Aggregaten - soweit diese in der konkreten Anlage vorhanden sind.

Das aus dem Stand der Technik bekannte System modelliert nur die Trocknung in der Vor- und Nachtrockenpartie, enthält aber keine Modelle folgender Aggregate bzw. Phänomene:
- Siebwassererwärmung,
- Nasspresseneinfluss auf die Papierbahntrocknung,
- Dampf- und Kondensatsystem,
- Wärmerückgewinnungssystem aus feuchter Abluft.

Das erfindungsgemäße Verfahren zur Steuerung zumindest der (erweiterten) Trockenpartie basiert hingegen auf einem Modell der Vor- und Nachtrockenpartie sowie der Leimpresse, der Nasspresse, des Dampf- und Kondensatsystems, des Wärmerückgewinnungssystems und der Siebwassererwärmung, da eine weitere Senkung des spezifischen Energieverbrauchs nur durch ein modellgestütztes Steuerungssystem erreicht werden kann, dessen Modell einen so weiten Anlagenteil (bzw. so viele Anlagenteile) umfasst.

In das Modell gehen auch die Eigenschaften der verschiedenen Stoffströme ein. Dabei werden die - zu Beginn der Papierherstellung anfallende - feuchte Fasermatte und das feuchte Papier jeweils als Faser-Wasser-Gemisch modelliert. Die Eigenschaften von feuchter Luft (Zuluft und Abluft der Papiertrocknung), von hochreinem Wasserdampf- und -kondensatgemisch sowie von Prozesswasser (ggf. mit Glykol versetzt) können hingegen auch z.B. tabellarisch hinterlegt sein.

Eine Senkung des spezifischen Energieverbrauchs (= Tonnen Dampf pro Tonne produzierten Papiers) kann hierbei natürlich nicht nur durch eine Verringerung des Energieverbrauchs bei gleichem Durchsatz der Papiermaschine erzielt werden, sondern auch durch eine Steigerung des Durchsatzes bei gleichem Energieverbrauch. Idealerweise lassen sich beide Bedingungen für einen reduzierten spezifischen Energieverbrauch gleichzeitig erfüllen, das heißt es wird ein höherer Durchsatz bei einem geringeren Einsatz von Energie erzielt.

Das erfindungsgemäße Verfahren kann für Offline-"Was wenn?"-Rechnungen verwendet werden. Durch die Berechnung der jeweiligen Massen- und Energiebilanzen sowie des spezifischen Energieverbrauchs können die Auswirkungen einer Änderung auf den Energieverbrauch auf einfache Weise simuliert werden.

Die berechneten Massen- und Energiebilanzen und/oder der zugehörige spezifische Energieverbrauch werden - insbesondere durch grafische und/oder tabellarische Darstellung - zur Anzeige gebracht. Hierbei kann vorteilhafterweise die physikalische Einheit vom Anwender gewählt werden, also beispielsweise ob ein bestimmter Massenstrom in Tonnen pro Stunde oder in Kilogramm pro Sekunde angezeigt werden soll.

Für die grafische Darstellung werden die berechneten Werte vorteilhafterweise in einer schematischen Darstellung des oder der die darzustellenden Werte betreffenden Anlagenteils oder Anlagenteile der Papiermaschine in unmittelbarer Nähe der betreffenden Komponente notiert. Durch diese Zuordnung können die betreffenden (Teil-) Ergebnisse für die jeweilige Komponente, z.B. der Leimpresse, "auf einen Blick" von einem Betrachter wahrgenommen werden.

Zur Verbesserung der Übersichtlichkeit der grafischen Darstellung ist es weiter vorteilhaft, nur eine - vom Bediener zu treffende - Auswahl der Ergebnisse darzustellen. So können beispielsweise in einer ersten Sicht nur die Ergebnisse für die Vor- und Nachtrockenpartie sowie der Leim- und Nasspresse betreffend die Papierbahn, in einer zweiten Sicht die Ergebnisse betreffend die Haubenluft und in einer dritten Sicht die Ergebnisse betreffend den Leimauftrag dargestellt werden. In weiteren Sichten können die Ergebnisse z.B. für das Dampf- und Kondensatsystem jeweils der Vor- und Nachtrockenpartie in einer entsprechenden Schemazeichnung dargestellt werden.

Dabei müssen die Ergebnisse nicht als Absolutwert in die Zeichnung eingetragen werden, sie können auch z.B. in Form eines Balkendiagramms grafisch dargestellt werden oder sich beispielsweise für "Was-wäre-wenn?"-Rechnungen prozentual auf die derzeitigen Istwerte der Papiermaschine beziehen.

In einer vorteilhaften Form der Ausgestaltung werden für den Stoffstrom "feuchtes Papier" zu den Parametern Temperatur, Massenstrom, absolute Feuchte, relative Feuchte; für den Stoffstrom "feuchte Luft" zu den Parametern Temperatur, Volumenstrom, Massenstrom, Energiestrom, absolute Feuchte, relative Feuchte, Taupunkt; für den Stoffstrom "Dampf und Kondensat" zu den Parametern Temperatur, Druck, Prozentsatz Dampf, Massenstrom, Energiestrom; für den Stoffstrom "Prozesswasser" zu den Parametern Temperatur, Massenstrom und Energiestrom Werte berechnet. Besonders vorteilhaft ist es, wenn zusätzlich zu den dargestellten Ergebnissen - Massen- und Energiebilanzen und/oder spezifischer Energieverbrauch - noch weitere Größen, wie z.B. Temperatur und Dichte der zu trocknenden Papierbahn, in die Darstellung - sei sie nun grafisch oder in Form einer tabellarischen Übersicht - mit aufgenommen werden. Ebenso ist es von besonders großem Vorteil, wenn berücksichtigt wird, dass Vor- und/oder Nachtrockenpartie üblicherweise aus mehreren Antriebsgruppen bestehen, wobei für jede Antriebsgruppe jeweils eine Massen- und Energiebilanz berechnet wird. Somit ermöglicht die Erfindung nicht nur eine Erkennung von Einsparpotenzialen, sondern führt auch zu einer Verbesserung des Verständnisses der Anlage. Dabei hilft ein Anlagenüberblick, um schadhafte oder zu wartende Aggregate (wie z.B. versottende Wärmetauscher), fehlerhafte Messtechnik (z.B. Durchfluss- und Differenzdruckmessung an einem Ventil passen nicht zusammen) oder eine ungünstige Fahrweise (z.B. wenn Bypass-Dampfventile, die in während der normalen Produktion geschlossen sein sollten, trotzdem geöffnet sind) zu identifizieren bzw. diagnostizieren.

In einer weiteren vorteilhaften Ausführungsform wird ein Rechenwert zumindest eines Parameters im Online-Modell dem Messwert eines zugehörigen Sensors zugeordnet und das Online-Modell durch Vergleich zwischen Rechenwert und Messwert adaptiert. Dabei wird z.B. der Massetransfer-Koeffizient in der Stefangleichung adaptiert, so dass berechnete und gemessene Papierfeuchte nach der Trockenpartie übereinstimmen.

In einer weiteren vorteilhaften Ausführungsform werden papiermaschinenspezifische Einflüsse von zumindest einem der Parameter Temperatur und Feuchte einer Prozesszuluft, Temperatur und Feuchte einer Prozessabluft, Siebwassertemperatur, Maschinengeschwindigkeit, Dampfdrücke in Hauptdampfgruppen und Differenzdrücke zu Nebendampfgruppen auf die Trocknung einer Papierbahn modelliert und für mindestens einen dieser Parameter Sollwerte berechnet. Somit können mit dem erfindungsgemäßen Verfahren Größen, wie z.B. die genannten, optimal eingestellt werden. Je nach Ausstattung der Papiermaschine kann aber auch - falls vorhanden - beispielsweise die Verwendung eines Dampfblaskastens in der Nasspresse berücksichtigt bzw. eingestellt werden. Sogenannte "Abrisse" der Papierbahn finden in der Regel in der "erweiterten Trockenpartie", die nach obiger Definition neben der eigentlichen Trockenpartie die Nass- und die Leimpresse mit einschließt, statt. Durch eine verbesserte "Runnability" kann die Zahl der Abrisse verringert und somit die Produktionszeit erhöht und die Produktionsmenge gesteigert werden.

In einer weiteren vorteilhaften Ausführungsform wird der Wert zumindest eines Parameters festgehalten, und für die Parameter, deren Werte nicht festgehalten werden, werden Sollwerte mittels eines Optimierungs-Algorithmus bestimmt. Der Optimierungs-Algorithmus kann ein gewichtetes Mittel zwischen spezifischem Energieverbrauch und Durchsatz optimieren. Auf diese Weise können zwei wichtige Ziele bei der Papierherstellung - Steigerung der Energieeffizienz und des Durchsatzes - in ausgewogener Weise gleichzeitig verfolgt werden. Alternativ können der spezifische Energieverbrauch oder der Durchsatz auch jeweils nur für sich optimiert werden.

In einer weiteren vorteilhaften Ausführungsform wird für zumindest einen der Parameter ein Wertebereich vorgegeben, innerhalb dessen eine vorgebbare Anzahl von Werten sukzessive festgehalten wird, und es werden für die Parameter, deren Werte nicht festgehalten werden, für jeden der Werte innerhalb des Wertebereichs jeweils Sollwerte mittels eines Algorithmus zur Optimierung eines gewichteten Mittels zwischen spezifischem Energieverbrauch und Durchsatz bestimmt. Auf diese Weise können "Vorschläge" in einem Schritt für den gesamten Wertebereich gemacht werden. Zudem kann ein Bediener (Anlagenfahrer) so leicht erkennen, welche Auswirkungen Änderungen eines Parameters auf die berechneten Sollwerte der anderen Parameter haben.

In einer weiteren vorteilhaften Ausführungsform werden die Sollwerte in regelmäßigen zeitlichen Abständen oder auf Anforderung eines Anlagenfahrers berechnet. Die zeitlichen Abstände können sich dabei nach der Prozessdynamik des modellierten Anlagenteils richten und betragen typischerweise zwischen 10 und 60 Sekunden, insbesondere 30 Sekunden.

In einer weiteren vorteilhaften Ausführungsform wird zumindest ein Sollwert einem dem entsprechenden Parameter zugeordneten Stellglied oder einer zugeordneten Regeleinrichtung eines DCS ("Distributed Control Systems") der Papiermaschine automatisch vorgegeben. Somit kann das erfindungsgemäße Verfahren nicht nur optimierte Sollwerte "vorschlagen", die z.B. von einem Anlagenfahrer bestätigt oder nur tendenziell übernommen werden können, sondern auch direkt als "Steuerungsmethode" in Hinblick auf die berechneten Sollwerte dienen. Dabei können die Sollwerte direkt einem Stellglied vorgegeben werden, in der Regel werden sie jedoch einer Regeleinrichtung des DCS zugeführt.

In einer weiteren vorteilhaften Ausführungsform wird ein zeitlicher Verlauf zumindest eines Sollwertes mit Hilfe eines modellprädiktiven Optimierungsalgorithmus berechnet. Dies bezieht sich vornehmlich auf Sortenwechsel und Pausen-Sollwerte, wodurch eine Beschleunigung von Sortenwechseln sowie des Anfahrens nach Stillständen oder Pausenzeiten erreicht werden kann. Es ist insbesondere die Temperatur der Trockenzylinder in der eigentlichen Trockenpartie nur relativ langsam änderbar beziehungsweise umsteuerbar. Die Verkürzung der Umsteuerzeit von einer Sorte zur nächsten sowie die Optimierung von Pausen-Sollwerten mit dem Ziel, möglichst schnell wieder anfahren zu können und gleichzeitig die Energieverluste während der Pausen-Zeit möglichst gering zu halten, sind weitere Mittel, um die Produktionsmenge zu steigern und den spezifischen Energieverbrauch zu senken.

In einer weiteren vorteilhaften Ausführungsform werden Anlagengrenzen bzw. Parameterwertgrenzen aus berechneten bzw. aus dem Online-Modell abgeleiteten Größen generiert und/oder sind fest vorgegeben und/oder werden vom Anlagenfahrer vorgegeben und bei der Berechnung eines Sollwertes berücksichtigt. Aus dem Online-Modell abgeleitete Größen sind dabei z.B. Taupunkttemperaturen. Die Berücksichtigung dieser Grenzwerte kann u.a. gewährleisten, dass die berechneten Sollwerte auf der konkreten Papiermaschine auch realisierbar sind.

In einer weiteren vorteilhaften Ausführungsform misst zumindest ein einem Parameter zugehöriger Sensor den Parameterwert und gibt bei einer Abweichung des Messwertes vom Rechenwert des Parameters ein Warnsignal aus. Hierdurch wird eine erweiterte Anlagenüberwachung erzielt, z.B. darauf, ob Ventile, die im Normalbetrieb geschlossen sein sollten, geöffnet sind. Ist dies der Fall, kann an einer Anzeigeeinheit z.B. eine optisch hervorgehobene Textnachricht "Ventil offen!" ausgegeben werden. Denkbar sind auch alternativ oder zusätzlich andere Formen der optischen oder akustischen Signalgebung, die möglicherweise auch gestaffelt in Abhängigkeit von der Differenz zwischen Messwert und Rechenwert zugeschaltet werden können, so dass bei einer großen Diskrepanz, die auf eine Fehlfunktion hindeuten könnte, buchstäblich "die Alarmglocken läuten". Auf diese Weise sorgt das erfindungsgemäße Verfahren nicht nur durch eine Überwachung der Messwerte für eine Einhaltung der erkannten oder berechneten Einsparpotenziale, sondern auch für eine erhöhte Sicherheit beim Betrieb der Papiermaschine.

Steuerungen für größere, aus mehreren Anlagenteilen bestehende Anlagen - wie z.B. Papiermaschinen - sind in der Regel mehrstufig aufgebaut. Meist sind unterlagerte Regler vorhanden, denen von einer übergeordneten Einrichtung Sollwerte vorgegeben werden. Die Sollwerte können hierbei momentan gültige Sollwerte sein oder Funktionen der Zeit sein (Sollwertverläufe).

In der Regel berechnen sogenannte Level-2-Systeme die Sollwerte mittels Online-Optimierungsalgorithmen, die ihrerseits auf Online-Modelle der zu steuernden Anlage zurückgreifen. Die Online-Modelle sind häufig mathematisch-physikalische Modelle. In manchen Fällen weisen die Modelle Parameter auf, die nicht mehr sinnvoll physikalisch modelliert werden können, sondern empirisch bestimmt werden müssen. Beispiele derartiger Parameter sind Wärmeübergangskoeffizienten, Reibwerte und dergleichen mehr. Die empirischen Parameter werden in der Regel während der Inbetriebsetzungsphase - teilweise basierend auf zusätzlichen Offline-Messungen - voreingestellt sowie während des Anlagenbetriebs adaptiert und/oder durch (adaptive) empirische Modelle repräsentiert. Ein Beispiel derartiger adaptiver empirischer Modelle sind neuronale Netze.

Eine erfindungsgemäße Steuerung einer erfindungsgemäßen Papiermaschine stellt ein derartiges Level-2-System dar. Dabei kann das erfindungsgemäße Verfahren Teil eines auf der Steuerung ablaufenden allgemeinen Betriebsverfahrens sein.

Durch das erfindungsgemäße Verfahren können auf einfache Weise Offline-Optimierungsrechnungen zur anlagenspezifischen Darstellung der papiermaschinenspezifischen Einflüsse durchgeführt werden. Insbesondere bei einer Aufnahme von weiteren Größen in die Darstellung der Ergebnisse kann das erfindungsgemäße modell-basierte Level-2-System auch als Softsensor zur Anzeige von nicht messbaren Werten genutzt werden. Somit ermöglicht die Erfindung nicht nur eine Erkennung von Einsparpotenzialen, sondern führt auch zu einem verbesserten Verständnis der Anlage.

Ist das Level-2-System online mit der Papiermaschine verbunden, können günstige Werte für die Parameter auch mittels der Steuerung an der Papiermaschine eingestellt werden.

Vorteilhafterweise wird zumindest ein Sollwert einem dem entsprechenden Parameter zugeordneten Stellglied oder einer zugeordneten Regeleinrichtung der Papiermaschine automatisch vorgegeben. Somit kann das Level-2-System nicht nur als "Vorschlagsystem", sondern auch als "Steuerungssystem" in Hinblick auf die mittels des Algorithmus zur Optimierung eines gewichteten Mittels zwischen dem spezifischen Energieverbrauch und Durchsatz berechneten Sollwerte dienen. Dabei können die Sollwerte direkt einem Stellglied vorgegeben werden, in der Regel werden sie jedoch einer Regeleinrichtung des DCS zugeführt.

Diese Regeleinrichtungen können als modellbasierte Regler ausgebildet sein, die ihre Stellgröße unter Verwendung eines Modells der von ihnen geregelten Regelstrecke ermitteln. Modellbasierte Regler können beispielsweise auch als modellprädiktive Regler ausgebildet sein, die als solche allgemein bekannt sind (siehe z.B. den Fachaufsatz "Modellbasierte prädiktive Regelung in der industriellen Praxis" von Rainer Dittmar und Bernd-Markus Pfeiffer, erschienen in at - Automatisierungstechnik, Bd. 54 (2006), Heft 12, Seiten 590 - 601). Wenn für einen Anlagenteil eine physikalische Modellierung nicht möglich bzw. nicht sinnvoll ist (beispielsweise der hierzu erforderliche Aufwand zu hoch ist), werden im Stand der Technik "Advanced Process Control"-Systeme eingesetzt, welche die Form von modellprädiktiven Reglern (englisch: MPC = model predictive control) aufweisen und welche auf vollständig empirisch bestimmten dynamischen Prozessmodellen beruhen. Die Identifikation dieser Modelle erfolgt im Regelfall offline oder in einer Kalibrierungsphase, jedoch nicht während des laufenden Betriebs. Es sind jedoch auch Online-Identifikationsverfahren bekannt.

Zumindest die erweiterte Trockenpartie der Papiermaschine wird vom Level-2-System gesteuert, wobei "gesteuert" hier im Rahmen der vorliegenden Erfindung im allgemeinen Sinne von "kontrolliert" verwendet wird. Es soll also offen bleiben, ob eine Steuerung im engeren Sinne oder eine Regelung realisiert ist. Auch ist die Ausgestaltung der unterlagerten Regler im Rahmen der vorliegenden Erfindung von untergeordneter Bedeutung. Es kann sich beispielsweise um Einfachregler oder um kaskadierte Regler handeln. Auch eine Ausgestaltung als verteiltes Steuerungssystem (DCS = distributed control system) ist möglich.

Das erfindungsgemäße Level-2-System kann somit sowohl für Offline-"Was wenn?"-Rechnungen verwendet werden als auch online angebunden sein und beispielsweise dem DCS/QCS-System (QCS = quality control system) in regelmäßigen zeitlichen Abständen (zum Beispiel alle 30 Sekunden) Sollwerte für relevante Stellglieder vorgeben.

In Abhängigkeit von der Form der Ausgestaltung der Erfindung kann eine Kombination aus mindestens zwei der nachstehenden Ziele erreicht werden:
- Senkung des spezifischen Energieverbrauchs,
- Erhöhung des Durchsatzes,
- Erhöhung der Produktionszeiten beziehungsweise der Produktionsmenge,
- Beschleunigung von Sortenwechseln sowie des Anfahrens nach Stillständen oder Pausenzeiten,
- Verbesserter Anlagenüberblick,
- Diagnose des Anlagenzustandes mit Ausgabe von Warnungen,
- Analyse der Anlagenfahrweise mit Anzeige von Anlagengrenzen und/oder Warnungen.

Im Folgenden wird die Erfindung anhand der in den Figuren dargestellten Ausführungsbeispiele näher beschrieben und erläutert. Es zeigen:
- FIG 1: eine schematische Darstellung der modellierten Anlagenteile einer Papiermaschine,
- FIG 2: eine diagrammatische Darstellung des erfindungsgemäßen Verfahrens.

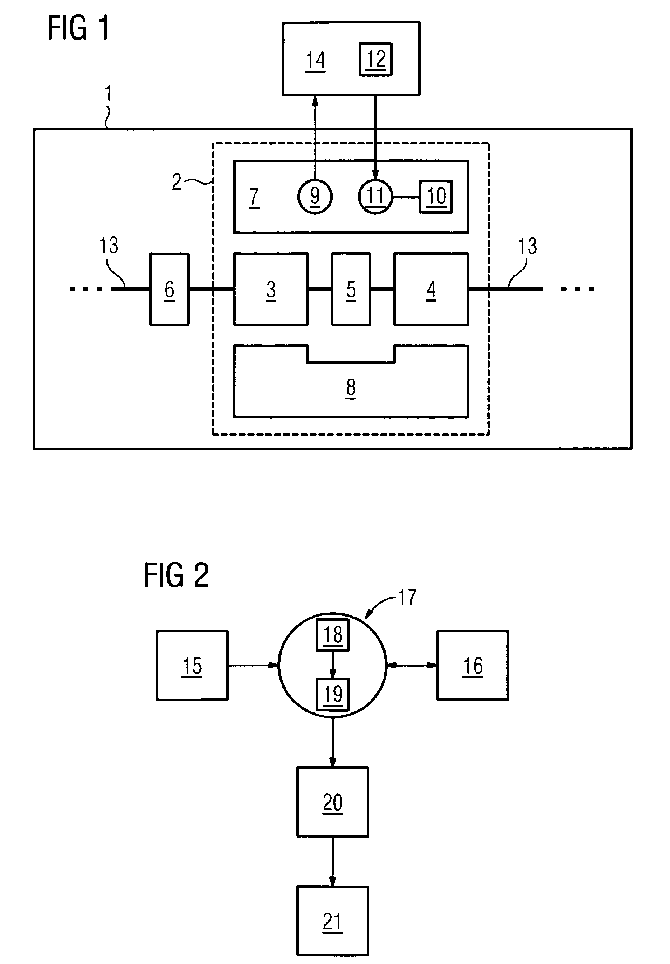

FIG 1 zeigt eine schematische Darstellung einer Papiermaschine 1, wobei die Darstellung auf die für die Erfindung wesentlichen Anlagenteile beschränkt ist. Diese sind zum einen die Trockenpartie 2 mit Vortrockenpartie 3, Nachtrockenpartie 4 und Leimpresse 5, wobei der Einfluss der Nasspresse 6 auf die Trocknung der Papierbahn 13 ebenfalls mitmodelliert wird. Zudem gehört zur Trockenpartie 2 ein Wärmerückgewinnungssystem 7 und ein Dampf- und Kondensatsystem 8. Alle Anlagenteile können mehrere Sensoren 9 zum Aufnehmen der verschiedensten Messwerte (u.a. für die im erfindungsgemäßen Verfahren berechneten Parameter) aufweisen, wobei nur ein Sensor 9 im Wärmerückgewinnungssystem 7 in der Figur dargestellt ist. Die Sensoren 9 liefern die Messwerte an eine Steuerung 14 der Papiermaschine 1, die geeignete Mittel 12 - wie z.B. Ein- und Ausgabemittel, Arbeitsspeicher, Prozessor etc. - zur Durchführung des erfindungsgemäßen Verfahrens aufweist. Die Anlagenteile können auch Stellglieder 10 aufweisen, die entweder direkt oder über eine übergeordnete Regeleinrichtung 11 von der Steuerung 14 angesteuert werden können. Dabei ist die genaue Form der Ausgestaltung der Regeleinrichtungen 11 - beispielsweise als modellprädiktive Regler - für die Lehre der Erfindung unwesentlich. Ebenso können die von der Steuerung 14 den Stellgliedern 10 vorzugebende Sollwerte, z.B. in regelmäßigen zeitlichen Abständen (beispielsweise alle 30 Sekunden), einem DCS/QCS ("Distributed Control System / Quality Control System") übergeben werden.

Die Vortrockenpartie 3 und die Nachtrockenpartie 4 weisen üblicherweise mehrere Trockengruppen (Trockenzylinder einer Dampf- oder Trockengruppe haben denselben Dampfdruck) auf, für die vorteilhafterweise jeweils einzeln eine Massen- und Energiebilanz berechnet wird. Da es ebenso von Vorteil ist, neben den berechneten Massen- und Energiebilanzen sowie dem spezifischen Energieverbrauch noch weitere Größen in die Darstellung der Ergebnisse mit aufzunehmen, ist es aus Gründen der Übersichtlichkeit geboten, nicht alle Ergebnisse in einer Darstellung anzuzeigen, sondern einem Benutzer mehrere Sichten anzubieten, in denen jeweils nur ein Ausschnitt dargestellt ist. Dabei können auch mehrere Sichten denselben Anlagenteil betreffen, wobei sich beispielsweise bei einer Darstellung von Vortrockenpartie 3, Leimpresse 5 und Nachtrockenpartie 4 eine Sicht auf Ergebnisse (und ggf. weitere Größen) betreffend die Papierbahn 13, eine auf die Haubenluft und eine weitere auf den Leimauftrag beziehen kann.

FIG 2 verdeutlicht in einem Diagramm die grundsätzliche Funktionsweise des erfindungsgemäßen Verfahrens. Dabei fließen für die Trocknung einer Papierbahn relevante Parameter 15 in ein Modell 17 der Trockenpartie einer Papiermaschine ein. Das Modell 17 berücksichtigt die papiermaschinenspezifischen Einflüsse der Parameter 15 und berechnet für die Parameter 15 Werte 16 sowie für die einzelnen Anlagenteile jeweils zumindest eine Massen- und Energiebilanz 20 sowie hieraus dann den spezifischen Energieverbrauch 21.

Mittels eines Optimierungsalgorithmus 18 können - ausgehend z.B. von den berechneten Werten 16 - auch Sollwerte 19 berechnet werden, die dann beispielsweise von der Steuerung 14 einer dem jeweiligen Sollwert (bzw. dem entsprechenden Parameter) zugeordneten Regeleinrichtung 11 übergeben werden, siehe FIG 1. Die Darstellung der Ergebnisse 20, 21 kann dann - wie oben bereits ausführlich geschildert - tabellarisch oder grafisch erfolgen.

Zusammenfassend betrifft die Erfindung ein Verfahren und eine modellgestützte Steuerung zur Steuerung zumindest eines Teils einer Papiermaschine, eine Papiermaschine mit einer derartigen Steuerung, ein Computerprogramm zur Durchführung des erfindungsgemäßen Verfahrens sowie ein Computerprogrammprodukt, auf dem das erfindungsgemäße Computerprogramm gespeichert ist. Um eine verbesserte beziehungsweise optimierte Fahrweise einer "erweiterten Trockenpartie" einer Papiermaschine - bestehend aus der "eigentlichen" Trockenpartie, ggf. aufgeteilt in Vor- und Nachtrockenpartie mit dazwischen befindlicher Leimpresse, einem Dampf- und Kondensatsystem, einem Abluft-Wärmerückgewinnungssystem, einer Nasspresse und dem Siebwasser - zu ermöglichen, wird ein die genannten Anlagenteile umfassendes Modell vorgeschlagen, mittels dem anhand von Werten für die für die Trocknung relevanten Parameter Massen- und Energiebilanzen für die Anlagenteile sowie der spezifische Energieverbrauch in der Trockenpartie berechnet wird.

## Patentansprüche

1. Verfahren zur Steuerung zumindest eines Teils einer Papiermaschine (1), enthaltend ein Online-Modell der Anlagenaggregate
● Trockenpartie (2), ggf. unterteilt in Vortrockenpartie (3) und Nachtrockenpartie (4) mit dazwischen liegender Leimpresse (5),
● Wärmerückgewinnungssystem (7),
● Dampf- und Kondensatsystem (8),
● sowie optional zusätzlich des Anlagenaggregates Nasspresse (6),
● sowie optional zusätzlich des Anlagenaggregates Siebwassertemperaturregelung,
wobei
- im Online-Modell zwischen den vier Stoffströmen
● feuchtes Papier,
● feuchte Luft,
● Dampf- und Kondensatgemisch hochreinen Wassers,
● Prozesswässer mit unterschiedlichen Glykol-Gehalten
unterschieden wird,
- im Online-Modell eine Massen- und Energiebilanz (20) für alle Stoffströme jeweils in
● der Trockenpartie (2),
● dem Wärmerückgewinnungssystem (7) und
● dem Dampf- und Kondensatsystem (8) berechnet wird,
- aus den Massen- und Energiebilanzen (20) der spezifische Energieverbrauch (21) berechnet wird und
- die Massen- und Energiebilanzen (20) und/oder der spezifische Energieverbrauch (21) zur Anzeige gebracht werden.

2. Verfahren nach Anspruch 1,
wobei
- für den Stoffstrom "feuchtes Papier" zu den Parametern (15)
● Temperatur,
● Massenstrom,
● absolute Feuchte,
● relative Feuchte;
- für den Stoffstrom "feuchte Luft" zu den Parametern (15)
● Temperatur,
● Volumenstrom,
● Massenstrom,
● Energiestrom,
● absolute Feuchte,
● relative Feuchte,
● Taupunkt;
- für den Stoffstrom "Dampf und Kondensat" zu den Parametern (15)
● Temperatur,
● Druck,
● Prozentsatz Dampf,
● Massenstrom,
● Energiestrom;
- für den Stoffstrom "Prozesswasser" zu den Parametern (15)
● Temperatur,
● Massenstrom,
● Energiestrom
Werte (16) berechnet werden.

3. Verfahren nach Anspruch 1 oder 2,
wobei
- ein Rechenwert zumindest eines Parameters (15) im Online-Modell dem Messwert eines zugehörigen Sensors (9) zugeordnet wird und
- das Online-Modell durch Vergleich zwischen Rechenwert und Messwert adaptiert wird.

4. Verfahren nach einem der vorherigen Ansprüche,
wobei
- papiermaschinenspezifische Einflüsse von zumindest einem der Parameter (15)
● Temperatur und Feuchte einer Prozesszuluft,
● Temperatur und Feuchte einer Prozessabluft,
● Siebwassertemperatur,
● Maschinengeschwindigkeit,
● Dampfdrücke in Hauptdampfgruppen und
● Differenzdrücke zu Nebendampfgruppen
auf die Trocknung einer Papierbahn (13) modelliert werden und
- für mindestens einen dieser Parameter (15) Sollwerte (19) berechnet werden.

5. Verfahren nach einem der vorherigen Ansprüche,
wobei der Wert (16) zumindest eines Parameters (15) festgehalten wird und für die Parameter (15), deren Werte (16) nicht festgehalten werden, Sollwerte (19) mittels eines Optimierungs-Algorithmus (18), insbesondere zur Optimierung eines gewichteten Mittels zwischen spezifischem Energieverbrauch (21) und Durchsatz, bestimmt werden.

6. Verfahren nach einem der vorhergehenden Ansprüche,
wobei für zumindest einen der Parameter (15) ein Wertebereich vorgegeben wird, innerhalb dessen eine vorgebbare Anzahl von Werten (16) sukzessive festgehalten wird, und wobei für die Parameter (15), deren Werte (16) nicht festgehalten werden, für jeden der Werte (16) innerhalb des Wertebereichs jeweils Sollwerte (19) mittels eines Algorithmus (18) zur Optimierung eines gewichteten Mittels zwischen spezifischem Energieverbrauch (21) und Durchsatz bestimmt werden.

7. Verfahren nach einem der Ansprüche 4 - 6,
wobei die Sollwerte in regelmäßigen zeitlichen Abständen oder auf Anforderung eines Anlagenfahrers berechnet werden.

8. Verfahren nach einem der Ansprüche 4 - 7,
wobei zumindest ein Sollwert (19) einem dem entsprechenden Parameter (15) zugeordneten Stellglied (10) oder einer zugeordneten Regeleinrichtung (11) eines DCS ("Distributed Control Systems") der Papiermaschine (1) automatisch vorgegeben wird.

9. Verfahren nach einem der Ansprüche 4 - 8,
wobei ein zeitlicher Verlauf zumindest eines Sollwertes (19) mit Hilfe eines modellprädiktiven Optimierungsalgorithmus berechnet wird.

10. Verfahren nach einem der Ansprüche 4 - 9,
wobei Anlagengrenzen bzw. Parameterwertgrenzen
- aus berechneten bzw. aus dem Online-Modell abgeleiteten Größen generiert werden und/oder
- fest vorgegeben sind und/oder
- vom Anlagenfahrer vorgegeben werden
und diese Anlagengrenzen bzw. Parameterwertgrenzen bei der Berechnung eines Sollwertes (19) berücksichtigt werden.

11. Verfahren nach einem der vorherigen Ansprüche,
wobei zumindest ein einem Parameter (15) zugehöriger Sensor (9) den Parameterwert misst und wobei bei einer Abweichung des Messwertes vom Rechenwert (16) des Parameters (15) ein Warnsignal ausgegeben wird.

12. Modellgestützte Steuerung (14) zur Steuerung zumindest eines Teils einer Papiermaschine (1) mit Mitteln (12) zur Durchführung eines Verfahrens nach einem der vorherigen Ansprüche.

13. Papiermaschine (1) mit zumindest einer Steuerung (14) nach Anspruch 12.

14. Computerprogramm zur Durchführung eines Verfahrens nach einem der Ansprüche 1 - 11 bei Ablauf in einer Steuerung (14) nach Anspruch 12.

15. Computerprogrammprodukt, auf dem ein Computerprogramm nach Anspruch 14 gespeichert ist.

## Claims

1. Method for controlling at least one part of a paper machine (1), containing an online model of the plant units
● drying section (2), possibly subdivided into pre-dryer section (3) and after-dryer section (4) with size press (5) located in between,
● heat recovery system (7),
● steam and condensate system (8),
● optionally additionally containing the plant unit wet press (6)
● and optionally additionally the plant unit white water temperature control,
wherein
- a distinction is drawn in the online model between the four material streams
● moist paper,
● moist air,
● steam and condensate mixture of highly pure water,
● process water with different glycol contents,
- in the online model, a mass and energy balance (20) for all the material streams is calculated in each case in
● the drying section (2),
● the heat recovery system (7) and
● the steam and condensate system (8),
- the specific energy consumption (21) is calculated from the mass and energy balances (20) and
- the mass and energy balances (20) and/or the specific energy consumption (21) are displayed.

2. Method according to Claim 1,
wherein
- values (16) are calculated for the material stream "moist paper" in relation to the parameters (15) comprising
● temperature,
● mass flow,
● absolute humidity,
● relative humidity;
- for the material stream "moist air" in relation to the parameters (15) comprising
● temperature,
● volume flow,
● mass flow,
● energy flow,
● absolute humidity,
● relative humidity,
● dew point;
- for the material stream "steam and condensate" in relation to the parameters (15) comprising
● temperature,
● pressure,
● percentage of steam,
● mass flow,
● energy flow;
- for the material stream "process water" in relation to the parameters (15) comprising
● temperature,
● mass flow,
● energy flow.

3. Method according to Claim 1 or 2,
wherein
- a computed value of at least one parameter (15) in the online model is assigned to the measured value from an associated sensor (9) and
- the online model is adapted by means of a comparison between computed value and measured value.

4. Method according to one of the preceding claims,
wherein
- paper machine-specific influences on the drying of a paper web (13) of at least one of the parameters (15) comprising
● temperature and humidity of process feed air, temperature and humidity of process exhaust air,
● white water temperature,
● machine speed,
● steam pressures in main steam groups and
● differential pressures relating to secondary steam groups are modeled and
- set points (19) are calculated for at least one of these parameters (15).

5. Method according to one of the preceding claims,
wherein the value (16) of at least one parameter (15) is fixed and, for the parameters (15) the values (16) of which are not fixed, set points (19) are determined by means of an optimization algorithm (18), in particular to optimize a weighted mean between specific energy consumption (21) and throughput.

6. Method according to one of the preceding claims,
wherein for at least one of the parameters (15) a value range is predefined, within which a predefinable number of values (16) is fixed successively, and for the parameters (15) the values (16) of which are not fixed, for each of the values (16) within the value range, in each case set points (19) are determined by means of an algorithm (18) in order to optimize a weighted mean between specific energy consumption (21) and throughput.

7. Method according to one of Claims 4 - 6,
wherein the set points are calculated at regular time intervals or upon a request from a plant manager.

8. Method according to one of Claims 4 - 7,
wherein at least one set point (19) is automatically predefined to an actuating element (10) assigned to the appropriate parameter (15) or an associated control device (11) of a DCS ("Distributed Control System") of the paper machine (1).

9. Method according to one of Claims 4 - 8,
wherein a variation over time of at least one set point (19) is calculated with the aid of a model-predictive optimization algorithm.

10. Method according to one of Claims 4 - 9,
wherein plant limits or parameter value limits
- are generated from calculated variables or variables derived from the online model and/or
- are fixedly predefined and/or
- predefined by the plant manager
and these plant limits or parameter value limits are taken into account when calculating a set point (19).

11. Method according to one of the preceding claims,
wherein at least one sensor (9) assigned to a parameter (15) measures the parameter value and wherein, in the event of a deviation of the measured value from the computed value (16) of the parameter (15), a warning signal is output.

12. Model-based controller (14) for controlling at least one part of a paper machine (1), having means (12) for carrying out a method according to one of the preceding claims.

13. Paper machine (1) having at least one controller (14) according to Claim 12.

14. Computer program for carrying out a method according to one of Claims 1 - 11 as it is executed in a controller (14) according to Claim 12.

15. Computer program product on which a computer program according to Claim 14 is stored.

## Revendications

1. Procédé de commande d'au moins une partie d'une machine (1) à papier comportant un modèle en ligne de l'ensemble de l'installation
● sècherie (2) le cas échéant subdivisée en avant-sécherie (3) et en après-sècherie (4) avec une presse encolleuse (5) entre elles,
● système (7) de récupération de la chaleur,
● système (8) de vapeur et de produit condensé,
● ainsi que facultativement, en plus de l'ensemble de l'installation, presse (6) humide,
● ainsi que facultativement, en plus de l'ensemble de l'installation, régulation de la température de l'eau blanche,
dans lequel
- on distingue dans le modèle en ligne entre les quatre courants de matière,
● papier humide,
● air humide,
● mélange de vapeur et de produit condensé d'eau très pure,
● eau de processus ayant des teneurs différentes en glycol,
- on calcule dans le modèle en ligne un bilan (20) massique et énergétique pour tous les courants de matière respectivement dans
● la sècherie (2),
● le système (7) de récupération de la chaleur et
● le système (8) de vapeur et de produit condensé,
- on calcule la consommation (21) d'énergie spécifique à partir des bilans (20) massiques et énergétiques et
- on affiche les bilans (20) massiques et énergétiques et/ou la consommation (21) d'énergie spécifique.

2. Procédé suivant la revendication 1,
dans lequel
- pour le courant de matière « papier humide » on calcule des valeurs (16) pour les paramètres (15)
● température,
● courant massique,
● humidité absolue,
● humidité relative ;
- pour le courant de matière « air humide » on calcule des valeurs (16) pour les paramètres (15),
● température,
● courant volumique,
● courant massique,
● courant énergétique,
● humidité absolue,
● humidité alternative,
● point de rosée ;
- pour le courant de matière « vapeur et produit condensé » on calcule des valeurs (16) pour les paramètres (15),
● température,
● pression,
● vapeur en pourcentage,
● courant massique,
● courant énergétique,
- pour le courant de matière « eau de processus » on calcule des valeurs (16) pour les paramètres (15)
● température,
● courant massique,
● courant énergétique.

3. Procédé suivant la revendication 1 ou 2,
dans lequel
- on associe une valeur calculée d'au moins un paramètre (15) dans le modèle en ligne à la valeur de mesure d'un capteur (9) associé et
- on adapte le modèle en ligne par comparaison entre la valeur calculée et la valeur de mesure.

4. Procédé suivant l'une des revendications précédentes,
dans lequel
- on modélise des influences spécifiques à la machine à papier d'au moins l'un des paramètres (15)
● température et humidité d'un air admis dans le processus,
● température et humidité d'un air évacué du processus,
● température de l'eau blanche,
● vitesse de la machine,
● pression de la vapeur dans des groupes de vapeur principaux et,
● pression différentielle aux groupes de vapeur auxiliaires sur le séchage d'une bande (13) de papier et
- on calcule des valeurs (19) de consigne pour au moins l'un de ces paramètres (15).

5. Procédé suivant l'une des revendications précédentes, dans lequel on fixe la valeur (16) d'au moins un paramètre (15) et, pour les paramètres (15) dont les valeurs (16) ne sont pas fixées, on détermine des valeurs (19) de consigne au moyen d'un algorithme (18) d'optimisation, notamment pour l'optimisation d'une moyenne pondérée entre une consommation (21) spécifique d'énergie et un débit.

6. Procédé suivant l'une des revendications précédentes, dans lequel, pour au moins l'un des paramètres (15), on prescrit une plage de valeur dans laquelle on maintient successivement un nombre, pouvant être prescrit, de valeurs (16) et dans lequel, pour les paramètres (15) dont les valeurs ne sont pas fixées, on détermine pour chacune des valeurs (16) dans la plage de valeur respectivement des valeurs (19) de consigne au moyen d'un algorithme (18) d'optimisation d'une moyenne pondérée entre la consommation (21) d'énergie spécifique et le débit.

7. Procédé suivant l'une des revendications 4 à 6, dans lequel on calcule les valeurs de consigne à des intervalles de temps réguliers ou sur demande d'un pilote de l'installation.

8. Procédé suivant l'une des revendications 4 à 7, dans lequel on prescrit automatiquement au moins une valeur (19) de consigne à un actionneur (10) associé au paramètre (15) correspondant ou à un dispositif (11) de régulation associé d'un DCS (« Distributed Control Systems ») de la machine (1) à papier.

9. Procédé suivant l'une des revendications 4 à 8,
dans lequel on calcule une courbe dans le temps d'au moins une valeur (19) de consigne à l'aide d'un algorithme d'optimisation à prédiction par modèle.

10. Procédé suivant l'une des revendications 4 à 9,
dans lequel on produit des limites d'installation ou des limites de valeur de paramètre
- à partir de grandeurs calculées ou déduites du modèle en ligne et/ou
- prescrites de manière fixe et/ou
- prescrites par le pilote de l'installation et on tient compte de ces limites d'installation ou de ces limites de valeur de paramètre lors du calcul d'une valeur (19) de consigne.

11. Procédé suivant l'une des revendications précédentes, dans lequel au moins un capteur (9) associé à un paramètre (15) mesure une valeur du paramètre et dans lequel, s'il y a un écart entre la valeur de mesure et la valeur (16) calculée du paramètre (15), on émet un signal d'alerte.

12. Commande (14) assistée par modèle pour la commande d'au moins une partie d'une machine (1) un papier, comprenant des moyens (12) pour effectuer un procédé suivant l'une des revendications précédentes.

13. Machine (1) à papier ayant au moins une commande (14) suivant la revendication 12.

14. Programme informatique pour effectuer un procédé suivant l'une des revendications 1 à 11 lorsqu'il se déroule dans une commande (14) suivant la revendication (12).

15. Produit de programme informatique sur lequel est mémorisé un programme informatique suivant la revendication 14.
